# EUROPEAN PATENT SPECIFICATION

(11) **EP 3 140 366 B1**
(45) Date of publication and mention of the grant of the patent: **18.12.2019**
(21) Application number: 15789262.1
(22) Date of filing: 29.04.2015
(51) Int. Cl.: C09K 8/14, C08L 71/12, C08K 7/14, C08K 3/04, C08G 69/26, C08L 77/06

(54) **REINFORCED POLYPHTHALAMIDE/POLY(PHENYLENE ETHER) COMPOSITION**
VERSTÄRKTE POLYPHTHALAMID/POLY(PHENYLENETHER)ZUSAMMENSETZUNG
COMPOSITION DE POLYPHTALAMIDE/POLY(OXYDE DE PHÉNYLÈNE) RENFORCÉE

(30) Priority: 05.05.2014 US 201461988611 P
(43) Date of publication of application: 15.03.2017
(73) Proprietor: SABIC Global Technologies B.V., 4612 PX Bergen op Zoom (NL)
(72) Inventor: TING, Sai-Pei, Selkirk, New York 12158 (US)
(74) Representative: Lang, Johannes
(86) International application number: PCT/US2015/028221
(87) International publication number: WO 2015/171394

(56) References cited:
- US-A- 5 916 970
- US-A- 5 916 970
- US-A1- 2005 014 874
- US-A1- 2005 038 203
- US-A1- 2006 167 144
- US-A1- 2006 205 872
- US-A1- 2009 242 844
- US-B1- 8 592 549

## Description

### BACKGROUND OF INVENTION

This application relates to polyphthalamide/poly(phenylene ether) blends and more particularly to reinforced polyphthalamide/poly(phenylene ether) blends.

Glass filled poly(phenylene ether)/polyamide 66 (GF-PPE/PA66) blends have been used in applications such as water pumps and water meters for long time. The morphology of PPE/PA66 blends can be defined as "islands-and-sea" where PPE particles are the dispersed phase (as islands) and PA66 is the continuous phase (as sea). As a result, PPE/PA66 blends are commonly recognized in industry as modified nylons with superior performance such as higher heat resistance, better dimension stability, less warpage and sagging, and less moisture absorption. Yet due to the inherent nature of PA66, PPE/PA66 blends are also susceptible to moisture induced property changes such as reduction of flexural modulus and tensile strength as the moisture content in the nylon matrix increases. In some cases when elevated temperatures are employed and/or aggressive chemicals are added such as chlorine in order to purify water, neat GF PA66 and GF PPE/PA66 blends may result in earlier part failure caused by severe nylon hydrolysis. Glass fiber reinforced polyphenylene ether/polyamide compositions are for example known from US2006/0205872.

There is an ongoing need in the art for reinforced polyamide (nylon) blends with improved high temperature stability.

### BRIEF DESCRIPTION OF THE INVENTION

The above-described and other drawbacks are alleviated by a reinforced composition comprising
55 to 85 weight percent (wt%) of a compatibilized blend of a polyphthalamide, aliphatic polyamide, and a poly(phenylene ether) wherein said compatibilized blend is formed from a mixture of polyphthalamide, aliphatic polyamide, poly(phenylene ether) and a functionalizing agent; and
15 to 45 wt% of a glass fiber,
wherein the polyphthalamide and the aliphatic polyamide comprise a common repeating unit and the composition comprises less than 0.1 wt% of phosphinates and less than 0.1 wt% of impact modifiers and weight percent is based on the total weight of the composition.

In another embodiment a reinforced composition comprises
55 to 85 wt% of a compatibilized blend formed from a mixture of polyphthalamide, aliphatic polyamide, poly(phenylene ether), and citric acid wherein the polyphthalamide comprises (a) 60-70 mol% of units of formula (I) 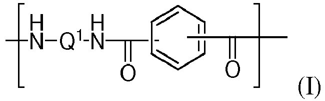 wherein Q¹ is a 1,6-hexyl group and the aromatic portion of the repeating unit is derived from terephthalic acid, (b) 20-30 mol% of units of formula (I) wherein Q¹ is a 1,6-hexyl group and the aromatic portion of the repeating unit is derived from isophthalic acid, and (c) 5-15 mol% of units of formula (II) 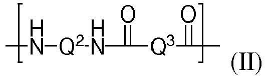 wherein Q² is a 1,4-butyl group and Q³ is a 1,6-hexyl group, an aliphatic polyamide comprising greater than 50 mol% of units of formula II, and the poly(phenylene ether) comprises 2,6-dimethyl-1,4-phenylene ether units; and
15 to 45 wt% of a glass fiber, wherein the composition comprises less than 0.1 wt% of phosphinates and less than 0.1 wt% of impact modifiers and weight percent is based on the total weight of the composition.

In another embodiment an article comprises a reinforced composition comprising
55 to 85 wt% of a compatibilized blend of a polyphthalamide, aliphatic polyamide and a poly(phenylene ether) wherein said compatibilized blend is formed from a mixture of polyphthalamide, aliphatic polyamide, poly(phenylene ether), and a functionalizing agent; and
15 to 45 wt% of a glass fiber, wherein the polyphthalamide and the aliphatic polyamide comprise a common repeating unit and the composition comprises less than 0.1 wt% of phosphinates and less than 0.1 wt% of impact modifiers and weight percent is based on the total weight of the composition.

In another embodiment an article comprises 55 to 85 weight percent (wt%) of a compatibilized blend formed from a mixture of polyphthalamide, aliphatic polyamide, poly(phenylene ether), and citric acid wherein the polyphthalamide comprises (a) 60-70 mol% of units of formula (I) 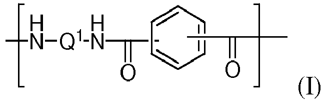 wherein Q¹ is a 1,6-hexyl group and the aromatic portion of the repeating unit is derived from terephthalic acid, (b) 20-30 mol% of units of formula (I) wherein Q¹ is a 1,6-hexyl group and the aromatic portion of the repeating unit is derived from isophthalic acid, and (c) 5-15 mol% of units of formula (II) 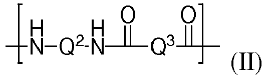 wherein Q² is a 1,4-butyl group and Q³ is a 1,6-hexyl group, an aliphatic polyamide comprising greater than 50 mol% of units of formula II, and the poly(phenylene ether) comprises 2,6-dimethyl-1,4-phenylene ether units; and
15 to 45 wt% of a glass fiber, wherein the composition comprises less than 0.1 wt% of phosphinates and less than 0.1 wt% of impact modifiers and weight percent is based on the total weight of the composition.

Also disclosed herein is a method of making the reinforced composition.

### DETAILED DESCRIPTION OF THE INVENTION

Polyphthalamides (PPA) are semi-aromatic, high temperature nylons that typically have melting points higher than 290°C and glass transitions temperatures greater than 80°C. PPAs are generally based on polyamide 6T. However polyamide 6T has a melting point of 370°C, and therefore is difficult to process and/or blend with other polymers, such as polyphenylene ether (PPE) without causing notable degradation. PPAs generally are copolymers that have various ratios of polyamide 6T, polyamide 61, and polyamide 6/6 to control properties such as melt flow, melting point, and glass transition temperature. PPAs are distinct from high temperature nylons (HTN) in that PPAs comprise aromatic repeating units in an amount greater than or equal to 55 weight percent. The glass transitions temperature and the melting point are indicative of the aromatic content of the PPA.

Reinforced PPE/PPA compositions have better thermal aging stability than reinforced PPE/PA66 compositions. However, it was surprising that reinforced PPE/PPA/PA66 compositions as described herein have equivalent or better thermal aging stability than reinforced PPE/PPA compositions.

The aliphatic polyamide is defined as an aliphatic polyamide added in addition to the polyphthalamide. It is understood that polyphthalamides may contain residual aliphatic polyamides resulting from synthesis of the polyphthalamide. Aliphatic polyamides are distinguished from polyphthalamides in that aliphatic polyamides have no repeating units that comprise aromatic moieties. Aliphatic polyamides include both homopolymers and copolymers. The aliphatic polyamide and the polyphthalamide comprise a common repeating unit which is defined herein as a repeating unit having the same chemical structure being present in the aliphatic polyamide and in the polypthalamide.

Polyphthalamides comprise repeating units having formula (I) 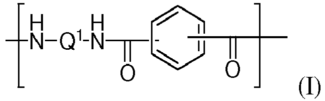 wherein Q¹ is independently at each occurrence a branched or unbranched alicyclic alkyl group having 4 to 8 carbons. In some embodiments, Q¹ is independently at each occurrence a 1,6-hexyl group. Polyamide resins, in general characterized by the presence of an amide group (-C(O)NH-) which is the condensation product of a carboxylic acid and an amine. Polyphthalamides are the condensation product of terephthalic acid and an amine, isophthalic acid and an amine or a combination of terephthalic acid, isophthalic acid and an amine. When employing more than one diamine the ratio of the diamines can affect some of the physical properties of the resulting polymer such as the melt temperature. When employing more than one acid, the ratio of the acids can affect some of the physical properties of the resulting polymer as well. The ratio of diamine to dicarboxylic acid is typically equimolar although excesses of one or the other may be used to determine the end group functionality. In addition the reaction can further include monoamines and monocarboxylic acids which function as chain stoppers and determine, at least in part, the end group functionality. In some embodiments it is preferable to have an amine end group content of greater than or equal to about 30 millIequivalents per gram (meq/g), or, more specifically, greater than or equal to about 40meq/g.

In addition to the repeating units of formula (I) the polyphthalamide also comprises units of formula (II) 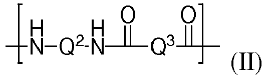 wherein Q² and Q³ are independently at each occurrence a branched or unbranched alicyclic alkyl group having 4 to 12 carbons. Q² and Q³ can be the same or different alicyclic alkyl group.

The polyphthalamide can comprise (a) 60-70 mol% of units of formula (I) 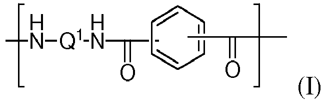 wherein Q¹ is a 1,6-hexyl group and the aromatic portion of the repeating unit is derived from terephthalic acid, (b) 20-30 mol% of units of formula (I) wherein Q¹ is a 1,6-hexyl group and the aromatic portion of the repeating unit is derived from isophthalic acid, and (c) 5-15 mol% of units of formula (II) 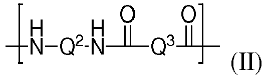 wherein Q² is a 1,4-butyl group and Q³ is a 1,6-hexyl group.

The polythalamide has a glass transition temperature (Tg) greater than or equal to 80°C, or, greater than or equal to 100°C, or, greater than or equal to 120°C. The polythalamide also has melting temperature (Tm) of 290 to 330°C. Within this range the Tm may be greater than or equal to 300°C. Also within this range the Tm may be less than or equal to 325°C.

The polyphthalamide is present in an amount of 15 to 41 weight percent based on the total weight of the composition. Within this range the amount of polyphthalamide can be greater than or equal to 18 weight percent, or, more specifically, greater than or equal to 21 weight percent. Also within this range the amount of polyphthalamide can be less than or equal to 38 weight percent, or, more specifically, less than or equal to 35 weight percent.

Aliphatic polyamide is characterized by the presence of an amide group (-C(O)NH-) and the absence of repeating units that comprise aromatic moieties. The aliphatic polyamide comprises repeating units of formula (II) as described above with regard to the polyphthalamide. The aliphatic polyamide can comprise greater than 50 mol% of units of formula II. Exemplary polyamide resins include, but are not limited to, polyamide-6; polyamide-6,6; and combinations comprising one or more of the foregoing polyamides. The composition may comprise two or more polyamides, for example the polyamide may comprises polyamide-6 and polyamide-6,6. In one embodiment the polyamide resin or combination of polyamide resins has a melting point (Tm) greater than or equal to 171°C.

In one embodiment, the aliphatic polyamide resin comprises an aliphatic polyamide having an amine end group concentration greater than or equal to 35 microequivalents amine end group per gram of polyamide (µeq/g) as determined by titration with HCl. Within this range, the amine end group concentration may be greater than or equal to 40 µeq/g, or, more specifically, greater than or equal to 45 µeq/g. The maximum amount of amine end groups is typically determined by the polymerization conditions and molecular weight of the polyamide. Amine end group content may be determined by dissolving the polyamide in a suitable solvent, optionally with heat. The polyamide solution is titrated with 0.01 Normal hydrochloric acid (HCl) solution using a suitable indication method. The amount of amine end groups is calculated based the volume of HCl solution added to the sample, the volume of HCl used for the blank, the molarity of the HCl solution and the weight of the polyamide sample.

The aliphatic polyamide is present in an amount of 4 to 30 weight percent based on the total weight of the composition. Within this range the amount of aliphatic polyamide can be greater than or equal to 7 weight percent, or, more specifically, greater than or equal to 10 weight percent. Also within this range the amount of aliphatic polyamide can be less than or equal to 27 weight percent, or, more specifically, less than or equal to 24 weight percent.

In addition to polyphthalamide and aliphatic polyamide, the composition comprises a poly(phenylene ether). Poly(phenylene ether) comprises repeating structural units of formula (III) 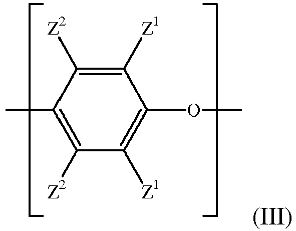 wherein for each structural unit, each Z¹ is independently halogen, unsubstituted or substituted C₁-C₁₂ hydrocarbyl with the proviso that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms; and each Z² is independently hydrogen, halogen, unsubstituted or substituted C₁-C₁₂ hydrocarbyl with the proviso that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms.

As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as "substituted", it can contain heteroatoms over and above the carbon and hydrogen members of the substituent residue. Thus, when specifically described as substituted, the hydrocarbyl residue can also contain halogen atoms, nitro groups, cyano groups, carbonyl groups, carboxylic acid groups, ester groups, amino groups, amide groups, sulfonyl groups, sulfoxyl groups, sulfonamide groups, sulfamoyl groups, hydroxyl groups, alkoxyl groups, or the like, and it can contain heteroatoms within the backbone of the hydrocarbyl residue.

The poly(phenylene ether) can comprise molecules having aminoalkyl-containing end group(s), typically located in an ortho position to the hydroxy group. Also frequently present are tetramethyl diphenylquinone (TMDQ) end groups, typically obtained from reaction mixtures in which tetramethyl diphenylquinone by-product is present.

The poly(phenylene ether) can be in the form of a homopolymer; a copolymer; a graft copolymer; an ionomer; or a block copolymer; as well as combinations comprising two or more of the foregoing polymers. Poly(phenylene ether) includes polyphenylene ether comprising 2,6-dimethyl-1,4-phenylene ether units optionally in combination with 2,3,6-trimethyl-1,4-phenylene ether units.

The poly(phenylene ether) can be prepared by the oxidative coupling of monohydroxyaromatic compound(s) such as 2,6-xylenol and/or 2,3,6-trimethylphenol. Catalyst systems are generally employed for such coupling; they can contain heavy metal compound(s) such as a copper, manganese or cobalt compound, usually in combination with various other materials such as a secondary amine, tertiary amine, halide or combination of two or more of the foregoing.

A portion of the poly(phenylene ether) can be functionalized with a polyfunctional compound (functionalizing agent) as described below. The poly(phenylene ether) can be functionalized prior to making the composition or can be functionalized as part of making the composition. Furthermore, prior to functionalization the poly(phenylene ether) can be extruded, for example to be formed into pellets. It is also possible for the poly(phenylene ether) to be melt mixed with other additives that do not interfere with functionalization. Exemplary additives of this type include s, flow promoters, and the like.

In some embodiments the poly(phenylene ether) can comprise 0.1 weight percent weight percent to 90 weight percent of structural units derived from a functionalizing agent, based on the total weight of the poly(phenylene ether). Within this range, the poly(phenylene ether) can comprise less than or equal to 80 weight percent, or, more specifically, less than or equal to 70 weight percent of structural units derived from functionalizing agent, based on the total weight of the poly(phenylene ether).

The poly(phenylene ether) can have a number average molecular weight of 3,000 to 40,000 grams per mole (g/mol) and a weight average molecular weight of 5,000 to 80,000 g/mol, as determined by gel permeation chromatography using monodisperse polystyrene standards, a styrene divinyl benzene gel at 40°C and samples having a concentration of 1 milligram per milliliter of chloroform. The poly(phenylene ether) or combination of poly(phenylene ether)s has an initial intrinsic viscosity of 0.1 to 0.60 deciliters per gram (dl/g), as measured in chloroform at 25°C. Initial intrinsic viscosity is defined as the intrinsic viscosity of the poly(phenylene ether) prior to melt mixing with the other components of the composition and final intrinsic viscosity is defined as the intrinsic viscosity of the poly(phenylene ether) after melt mixing with the other components of the composition. As understood by one of ordinary skill in the art the viscosity of the poly(phenylene ether) may be up to 30% higher after melt mixing. The percentage of increase can be calculated by (final intrinsic viscosity - initial intrinsic viscosity)/initial intrinsic viscosity. Determining an exact ratio, when two initial intrinsic viscosities are used, will depend somewhat on the exact intrinsic viscosities of the poly(phenylene ether) used and the ultimate physical properties that are desired.

The poly(phenylene ether) is present in an amount of 14 to 34 weight percent based on the total weight of the composition. Within this range the poly(phenylene ether) may be present in an amount greater than or equal to 17 weight percent, or, more specifically, greater than or equal to 20 weight percent. Also within this range the poly(phenylene ether) can be present in an amount of less than or equal to 31 weight percent, or, more specifically, less than or equal to 28 weight percent.

In some embodiments the polyphthalamide to poly(phenylene ether) weight ratio is 1.45 to 0.90.

The compatibilized blend is formed using a functionalizing agent. When used herein, the expression "functionalizing agent" refers to polyfunctional compounds which interact with the poly(phenylene ether), the polyamide resin, or both. This interaction may be chemical (e.g., grafting) and/or physical (e.g., affecting the surface characteristics of the dispersed phases). In either instance the resulting compatibilized polyphthalamide/poly(phenylene ether) composition appears to exhibit improved compatibility, particularly as evidenced by enhanced impact strength, mold knit line strength and/or elongation. As used herein, the expression "compatibilized polyphthalamide/poly(phenylene ether) blend" refers to those compositions which have been physically and/or chemically compatibilized with a functionalizing agent.

The functionalizing agent comprises a polyfunctional compound that is one of two types. The first type has in the molecule both (a) a carbon-carbon double bond and (b) at least one carboxylic acid, anhydride, epoxy, imide, amide, ester group or functional equivalent thereof. Examples of such polyfunctional compounds include maleic acid; maleic anhydride; fumaric acid; maleic hydrazide; dichloro maleic anhydride; and unsaturated dicarboxylic acids (e.g. acrylic acid, butenoic acid, methacrylic acid, t-ethylacrylic acid, pentenoic acid). In some embodiments, the functionalizing agent comprises maleic anhydride and/or fumaric acid.

The second type of polyfunctional functionalizing agent compounds are characterized as having both (a) a group represented by the formula (OR) wherein R is hydrogen or an alkyl, aryl, acyl or carbonyl dioxy group and (b) at least two groups each of which may be the same or different selected from carboxylic acid, acid halide, anhydride, acid halide anhydride, ester, orthoester, amide, imido, amino, and salts thereof. Typical of this type of functionalizing agents are the aliphatic polycarboxylic acids, acid esters and acid amides represented by the formula (IV):

(R^{I}O)ₘR(COOR^{II})ₙ(CONR^{III}R^{IV})ₛ (IV)

wherein R is a linear or branched chain saturated aliphatic hydrocarbon having 2 to 20, or, more specifically, 2 to 10 carbon atoms; R^{I} is hydrogen or an alkyl, aryl, acyl or carbonyl dioxy group having 1 to 10, or, more specifically, 1 to 6, or, even more specifically, 1 to 4 carbon atoms; each R^{II} is independently hydrogen or an alkyl or aryl group having 1 to 20, or, more specifically, 1 to 10 carbon atoms; each R^{III} and R^{IV} are independently hydrogen or an alkyl or aryl group having 1 to 10, or, more specifically 1 to 6, or, even more specifically, 1 to 4, carbon atoms; m is equal to 1 and (n + s) is greater than or equal to 2, or, more specifically, equal to 2 or 3, and n and s are each greater than or equal to zero and wherein (OR^{I}) is alpha or beta to a carbonyl group and at least two carbonyl groups are separated by 2 to 6 carbon atoms. Obviously, R^{I}, R^{II}, R^{III} and R^{IV} cannot be aryl when the respective substituent has less than 6 carbon atoms.

Suitable polycarboxylic acids include, for example, citric acid, malic acid, agaricic acid; including the various commercial forms thereof, such as for example, the anhydrous and hydrated acids; and combinations comprising one or more of the foregoing. In some embodiments, the functionalizing agent comprises citric acid. Illustrative of esters useful herein include, for example, acetyl citrate and mono- and/or distearyl citrates and the like. Suitable amides useful herein include, for example, N,N'-diethyl citric acid amide; N-phenyl citric acid amide; N-dodecyl citric acid amide; N,N'-didodecyl citric acid amide and N-dodecyl malic acid. Derivates include the salts thereof, including the salts with amines and the alkali and alkaline metal salts. Exemplary suitable salts include calcium malate, calcium citrate, potassium malate, and potassium citrate.

The foregoing functionalizing agents may be added directly to the melt blend or pre-reacted with either or both the poly(phenylene ether) and polyamide. In some embodiments, at least a portion of the functionalizing agent is pre-reacted, either in the melt or in a solution of a suitable solvent, with all or a part of the poly(phenylene ether). It is believed that such pre-reacting may cause the functionalizing agent to react with the polymer and, consequently, functionalize the poly(phenylene ether). For example, the poly(phenylene ether) may be pre-reacted with maleic anhydride, fumaric acid and/or citric acid to form an anhydride and/or acid functionalized poly(phenylene ether) which has improved compatibility with the polyamide compared to a non-functionalized poly(phenylene ether).

The amount of the functionalizing agent used will be dependent upon the specific functionalizing agent chosen and the specific polymeric system to which it is added.

In some embodiments, the functionalizing agent is employed in an amount of 0.05 to 2.0 weight percent, based on the total weight of the composition. Within this range the amount of functionalizing agent may be greater than or equal to 0.1, or, more specifically, greater than or equal to 0.2, or, more specifically, greater than or equal to 0.5 weight percent. Also within this range the amount of functionalizing agent may be less than or equal to 1.75, or, more specifically, less than or equal to 1.5 weight percent, or, more specifically less than or equal to 0.9 weight percent.

The composition comprises a glass fiber. The glass fiber may have an average length of 2.8 to 3.6 millimeters. The glass fiber may have an average diameter of 8 to 16 micrometers. In some embodiments the glass fiber comprises a nylon glass fiber. A nylon glass fiber is defined as a glass fiber surface treated with silanes to improve adhesion and dispersion with polyamide as are commonly known in the art.

The glass fiber is incorporated in an amount of 15 to 45 weight percent based on the total weight of the composition. Within this range the amount of glass fiber can be greater than or equal to 20 weight percent, or, more specifically, greater than or equal to 25 weight percent. Also within this range the amount of glass fiber can be less than or equal to 40, or, more specifically, less than or equal to 35 weight percent, or, more specifically, less than or equal to 24 weight percent.

The composition can, optionally, further comprise one or more other additives known in the thermoplastics arts. Useful additives include, for example, stabilizers, mold release agents, processing aids, drip retardants, nucleating agents, dyes, pigments, colorants, crystallization nucleators, metal salts, antioxidants, anti-static agents, plasticizers, lubricants, blowing agents, metal deactivators, antiblocking agents, nanoclays, fragrances (including fragrance-encapsulated polymers), and the like, and combinations thereof. Additives can be added in amounts that do not unacceptably detract from the desired performance and physical properties of the composition. Such amounts can be determined by a skilled artisan without undue experimentation. Generally, the total amount of additives will be less than or equal to 5 weight percent based on the total weight of the composition.

In one embodiment, the composition comprises a black pigment. In one embodiment the black pigment comprises carbon black in an amount up to 0.5 weight percent, based on the total weight of the composition.

The composition can, optionally, exclude any polymer other than those taught herein as required.

Specific embodiments of the compositions are shown in Table 1.

**Table 1**

| | Embodiment A | Embodiment B |
|---|---|---|
| PPE (as described in Table 2) | 24.00 | 24.00 |
| Citric Acid | 0.49 | 0.49 |
| Carbon black | 0.20 | 0.20 |
| Antioxidant, Irganox 1010 | 0.30 | 0.30 |
| Potassium Iodide solution, 33% | 0.20 | 0.20 |
| Cuprous Iodide | 0.01 | 0.01 |
| PPA I or III (as described in Table 2) | 35.00 | 25.00 |
| Polyamide 66 | 10.00 | 20.00 |
| Glass fiber (as described in Table 2) | 30.00 | 30.00 |

The composition can be prepared using various techniques, including batch or continuous techniques that employ kneaders, extruders, mixers, and the like. For example, the composition can be formed as a melt blend employing a twin-screw extruder. In some embodiments at least some of the components are added sequentially. For example, the poly(phenylene ether) and functionalizing agent may be added to the extruder at the feed throat or in feeding sections adjacent to the feed throat, while the polyphthalamide may be added to the extruder in a subsequent feeding section downstream. When a functionalized poly(phenylene ether) is used the functionalized poly(phenylene ether) may be added to the extruder at the feed throat or in feeding sections adjacent to the feed throat, while the polyphthalamide may be added to the extruder in a subsequent feeding section downstream. A vacuum system may be applied to the extruder, prior to the second sequential addition, to generate a sufficient vacuum to lower the residual levels of non-reacted functionalizing agent and any other volatile materials. In an alternative embodiment, the sequential addition of the components may be accomplished through multiple extrusions. A composition may be made by preextrusion of selected components, such as the poly(phenylene ether) and the functionalizing agent to produce a pelletized mixture. A second extrusion may then be employed to combine the preextruded components with the remaining components. The extruder may be a two lobe or three lobe twin screw extruder.

The composition can be used to make articles such as engine fluid handling components, engine cooling components such as hoses, pumps, manifolds, turbo outlets, and fluid meters.

### EXAMPLES

The examples used the materials described in Table 2 and in the following paragraphs.

**Table 2.**

| **Component** | **Grade** | **Supplier** | **Description** |
|---|---|---|---|
| PPE | PPO® (0.40IV) | Sabic Innovative Plastics, US LLC | Poly(2,6-dimethyl-1,4-phenylene)ether with an intrinsic viscosity of 0.40 dl/g. |
| Citric Acid | Citric Acid | International Chemical Incorporated | Citric Acid - functionalizing agent |
| Anti-oxidant | Irganox 1010 | Great Lakes Chemcial Corporation | Heat Stabilizer |
| Liquid potassium iodide | Liquid KI | Ajay North America Incorporated | Heat Stabilizer |
| Cuprous Iodide | Cuprous Iodide | Ajay North America Incorporated | Heat Stabilizer |
| PA 6/6 | Vydyne 21Z | Ascend Inc. | Polyamide 6/6 |
| Polyphthalamide I | Amodel A-1006 | Solvay Advanced Polymers | Semi-aromatic nylon; 6T/6I/66 |
| Polyphthalamide II | Amodel A-1007 | Solvay Advanced Polymers | Semi-aromatic nylon; 6T/6I |
| Polyphthalamide | Amodel A-6000 | Solvay Advanced Polymers | Semi-aromatic nylon; 6T/66 |
| High temperature nylon (HTN) | HTN501 | DuPont | Semi-aromatic nylon; 6T/2-methylpentamethylene diamine |
| Glass Fibers | ChopVantage® HP 3540 | PPG | Chopped glass fibers with average length of 3.2 millimeters and an average diameter of 10 micrometers |

In Table 2 the polyphthalamides are described by the mol% of their constituent structural groups. 6T represents repeating units derived from 1,6-hexamethylene diamine and terephthalic acid, 61 represents repeating units derived from 1,6-hexamethylene diamine and isophthalic acid, and 66 represents units derived from 1,6-hexamethylene diamine and adipic acid. The amounts and structure of the repeating units was determined using nuclear magnetic resonance spectroscopy.

The Examples in Table 3 also contained 1.0 weight percent of a combination of additives (Irganox 1010, potassium iodide, copper iodide, and carbon black) and were made using 0.49 weight percent citric acid. The Examples in Table 4 also contained 0.7 weight percent of a combination of additives (Irganox 1010, potassium iodide, copper iodide, and carbon black) and were made using 0.49 weight percent citric acid.

The examples were made by melt blending the poly(phenylene ether), citric acid, additives, polyphthalamide or polyamide to form a first melt mixture and melt mixing the glass fibers with the first melt mixture in a 30 millimeter Werner Pfleider twin screw extruder. The extruder for the examples without polyphthalamide was set with barrel temperatures of 248-287°C and a die temperature of 287°C, with the screw rotating at 240 rotations per minute (rpm) and a rate of about 18 kilograms per hour. The extruder for the examples with polyphthalamide was set with barrel temperatures of 260-307°C and a die temperature of 343°C, with the screw rotating at 240 rotations per minute (rpm) and a rate of about 18 kilograms per hour. The amounts of the components of the compositions are shown in Tables 3 and 4. Amounts are in weight percent based on the total weight of the compositions. The compositions were molded and tested according to the methods shown in Table 5. The examples were subject to thermal aging at 250°C and the tensile strength of the aged samples was expressed as percentage of the unaged specimen (% retention of tensile strength). For some examples the weight retention after thermal aging was determined as well. The hours of aging are shown in the tables.

**Table 3.**

| | C EX 1 | EX 1 | C EX 2 | C EX3 | C EX 4 | CEX5 | C EX 6 | C EX 7 |
|---|---|---|---|---|---|---|---|---|
| PPE | 19.00 | 19.00 | 19.00 | 19.00 | 19.00 | 19.00 | 19.00 | 19.00 |
| Polyphthalamide I | 50.00 | 40.00 | - | - | - | - | - | - |
| Polyphthalamide II | - | - | 50.00 | 45.00 | 40.00 | - | - | - |
| HTN | - | - | - | - | - | 50.00 | 40.00 | - |
| PA 6/6 | - | 10.00 | - | 5.00 | 10.00 | - | 10.00 | 50.00 |
| Glass Fibers | 30.00 | 30.00 | 30.00 | 30.00 | 30.00 | 30.00 | 30.00 | 30.00 |
| | | | | | | | | |
| Izod @ 23°C, notched | 7.7 | 8.2 | 7.2 | 7.4 | 7.4 | 5.0 | 7.4 | 8.8 |
| Izod @ 23°C, un-notched | 51.4 | 52.7 | 35.0 | 31.4 | 27.2 | 23.3 | 35.9 | 57.8 |
| Tensile strength retention after thermal aging at 250°C | | | | | | | | |
| 250 hours | 63% | 63% | 72% | 63% | 68% | 68% | 64% | 47% |
| 500 hours | 58% | 60% | 66% | 61% | 65% | 61% | 59% | x |
| 750 hours | 51% | 56% | 57% | 55% | 60% | 55% | 51% | x |
| 1000 hours | 44% | 52% | 50% | 49% | 55% | 45% | 49% | x |
| 1500 hours | x | 44% | x | x | x | 22% | 39% | x |

**Table 4.**

| | C EX 8 | EX 2 | EX 3 | EX 4 | C EX 9 | C EX 10 | EX 10 | EX 11 |
|---|---|---|---|---|---|---|---|---|
| PPE | 24.00 | 24.00 | 24.00 | 24.00 | 24.00 | 24.00 | 24.00 | 24.00 |
| Polyphthalamide I | 45.00 | 35.00 | 25.00 | 15.00 | - | - | - | - |
| Polyphthalamide III | - | - | - | - | - | 45.00 | 35.00 | 25.00 |
| PA6/6 | - | 10.00 | 20.00 | 30.00 | 45.00 | - | 10.00 | 20.00 |
| Glass fiber | 30.00 | 30.00 | 30.00 | 30.00 | 30.00 | 30.00 | 30.00 | 30.00 |
| Izod - notched, 23°C | 8.8 | 8.9 | 8.7 | 9.3 | 9.8 | 7.4 | 8.3 | 9.0 |
| Izod - unnotched, 23°C | 44 | 47 | 50 | 52 | 55 | 43 | 57 | 60 |
| Weight retention after thermal aging at 250°C | | | | | | | | |
| 250 hours | 99% | 99% | 99% | 99% | 96% | 99% | 99% | 99% |
| 500 hours | 98% | 98% | 98% | 97% | 90% | 97% | 97% | 97% |
| 750 hours | 96% | 96% | 97% | 96% | 86% | 94% | 94% | 94% |
| 1000 hours | 93% | 94% | 95% | 93% | 83% | 91% | 92% | 91% |
| 1500 hours | 86% | 90% | 92% | 88% | 75% | 86% | 87% | 86% |
| Tensile strength retention after thermal aging at 250°C | | | | | | | | |
| 250 hours | 73% | 73% | 86% | 85% | 52% | 65% | 73% | 81% |
| 500 hours | 68% | 71% | 81% | 80% | 48% | 61% | 69% | 75% |
| 750 hours | 59% | 67% | 79% | 72% | 40% | 59% | 63% | 68% |
| 1000 hours | 53% | 64% | 74% | 72% | 44% | 56% | 62% | 52% |
| 1500 hours | 42% | 58% | 68% | 65% | x | x | 56% | x |

**Table 5**

| Test Name | Method | Units |
|---|---|---|
| Notched Izod | ISO 180 | Kiloj oules/meter² |
| Tensile Strength @ Break | ISO 527 | Megapascals |

Example 1 shows that a reinforced composition comprising a polyphthalamide and an aliphatic polyamide having the a common repeating unit consistently show equivalent or better tensile strength retention than a reinforced composition comprising the polyphthalamide or the polyamide (Comparative Examples 1 and 7). In contrast, reinforced compositions comprising a polyphthalamide and an aliphatic polyamide that do not have a common repeating unit do not consistently demonstrate this same phenomenon (Comparative Examples 3 and 4). Similarly, reinforced compositions comprising a high temperature nylon and an aliphatic polyamide also do not consistently demonstrate this phenomenon (Comparative Example 6).

The data in Table 4 provides further evidence and shows that with increasing amounts of the aliphatic polyamide the tensile strength retention actually increases and can be greater than the tensile strength retention of a reinforced composition comprising a polyphthalamide without the aliphatic polyamide (Examples 2 through 4 and Examples 10 and 11, Comparative Examples 8 and 10). This is highly unexpected since the tensile strength of reinforced compositions comprising an aliphatic polyamide without a polyphthalamide show markedly less tensile strength retention after thermal aging (Comparative Example 9).

In the specification and the claims, reference is made to a number of terms, which shall be defined to have the following meanings. The terms "first," "second," and the like, "primary," "secondary," and the like, "(a)," "(b)" and the like, as used herein do not denote any order, quantity, or importance, but rather are used to distinguish one element from another. The endpoints of all ranges directed to the same component or property are inclusive of the endpoint and independently combinable. Reference throughout the specification to "one embodiment," "another embodiment," "an embodiment," "some embodiments," and so forth, means that a particular element (e.g., feature, structure, property, and/or characteristic) described in connection with the embodiment is included in at least one embodiment described herein, and may or may not be present in other embodiments. In addition, it is to be understood that the described element(s) may be combined in any suitable manner in the various embodiments. The singular forms "a", "an" and "the" include plural referents unless the context clearly dictates otherwise. "Optional" or "optionally" means that the subsequently described event or circumstance may or may not occur, and that the description includes instances where the event occurs and instances where it does not.

As such, further modifications and equivalents of the invention herein disclosed may occur to persons skilled in the art using no more than routine experimentation, and all such modifications and equivalents are believed to be within the scope of the invention as defined by the following claims.

## Claims

1. A reinforced composition comprising:
55 to 85 wt% of a compatibilized blend of a polyphthalamide, an aliphatic polyamide, and a poly(phenylene ether) wherein said compatibilized blend is formed from a mixture of polyphthalamide, poly(phenylene ether), aliphatic polyamide, and a functionalizing agent; and
15 to 45 wt% of glass fiber,
wherein the polyphthalamide and the aliphatic polyamide comprise a common repeating unit and the composition contains less than 0.1 wt% of phosphinates and less than 0.1 wt% of impact modifiers and weight percent is based on the total weight of the composition.

2. The reinforced composition of claim 1, wherein the polyphthalamide comprises (a) 60-70 mol% of units of formula (I) 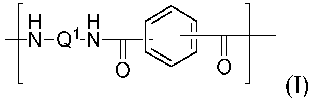 wherein Q¹ is a 1,6-hexyl group and the aromatic portion of the repeating unit is derived from terephthalic acid, (b) 20-30 mol% of units of formula (I) wherein Q¹ is a 1,6-hexyl group and the aromatic portion of the repeating unit is derived from isophthalic acid, and (c) 5-15 mol% of units of formula (II) 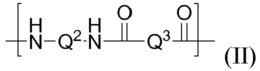 wherein Q² is a 1,4-butyl group and Q³ is a 1,6-hexyl group.

3. The reinforced composition of claim 2, wherein the aliphatic polyamide comprises greater than 50 mol% of units of formula II.

4. The reinforced composition of any of claims 1 to 3, wherein the polyphthalamide is present in an amount of 15 to 41 weight percent, the aliphatic polyamide is present in an amount of 4 to 30 weight percent, and the poly(phenylene ether) is present in an amount of 14 to 34 weight percent, and weight percent is based on the total weight of the composition.

5. The reinforced composition of any of claims 1 to 3, wherein the glass fiber is present in an amount of 20 to 24 weight percent, the polyphthalamide is present in an amount of 18 to 38 weight percent, the aliphatic polyamide is present in an amount of 7 to 27 weight percent, and the poly(phenylene ether) is present in an amount of 17 to 31 weight percent, and weight percent is based on the total weight of the composition.

6. The reinforced composition of any of claims 1 to 3, wherein the glass fiber is present in an amount of 25 to 35 weight percent, polyphthalamide is present in an amount of 21 to 35 weight percent, the aliphatic polyamide is present in an amount of 10 to 24 weight percent, and the poly(phenylene ether) is present in an amount of 20 to 28 weight percent, and weight percent is based on the total weight of the composition.

7. The reinforced composition of any of claims 1 to 6, wherein the aliphatic polyamide comprises polyamide-6,6.

8. The reinforced composition of any of claims 1 to 7, wherein the glass fiber has an average diameter of 8 to 16 micrometers, an average length of 2.8 to 3.6 millimeters or a combination thereof.

9. The reinforced composition of any of claims 1 to 8, wherein the poly(phenylene ether) comprises 2,6-dimethyl-1,4-phenylene ether units.

10. The reinforced composition of any of claims 1 to 9, wherein the functionalizing agent comprises maleic anhydride, fumaric acid, or citric acid.

11. The reinforced composition of any of claims 1 to 10, further comprising a black pigment.

12. The reinforced composition of claim 1, wherein the black pigment is carbon black and is present in an amount up to 0.5 weight percent, based on the total weight of the composition.

13. The reinforced composition of any of claims 1 to 12, wherein the glass fiber comprises nylon glass fiber.

## Patentansprüche

1. Verstärkte Zusammensetzung, umfassend:
55 bis 85 Gew.-% einer kompatibilisierten Mischung eines Polyphthalamids, eines aliphatischen Polyamids und eines Poly(phenylenether)s, wobei die kompatibilisierte Mischung aus einem Gemisch von Polyphthalamid, Poly(phenylenether), aliphatischem Polyamid und einem Funktionalisierungsmittel gebildet wird; und
15 bis 45 Gew.-% Glasfaser,
wobei das Polyphthalamid und das aliphatische Polyamid eine übliche Wiederholungseinheit umfassen und die Zusammensetzung weniger als 0,1 Gew.-% an Phosphinaten und weniger als 0,1 Gew.-% an Schlagzähmodifikatoren enthält und Gewichtsprozent auf das Gesamtgewicht der Zusammensetzung bezogen ist.

2. Verstärkte Zusammensetzung nach Anspruch 1, wobei das Polyphthalamid (a) 60-70 Mol-% an Einheiten der Formel (I) 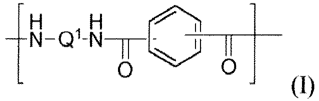 wobei Q¹ eine 1,6-Hexylgruppe ist und der aromatische Anteil der Wiederholungseinheit von Terephthalsäure abgeleitet ist, (b) 20-30 Mol-% an Einheiten der Formel (I), wobei Q¹ eine 1,6-Hexylgruppe ist und der aromatische Anteil der Wiederholungseinheit von Isophthalsäure abgeleitet ist, und (c) 5-15 Mol-% an Einheiten der Formel (II) 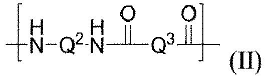 wobei Q² eine 1,4-Butylgruppe ist und Q³ eine 1,6-Hexylgruppe ist, umfasst.

3. Verstärkte Zusammensetzung nach Anspruch 2, wobei das aliphatische Polyamid mehr als 50 Mol-% an Einheiten der Formel II umfasst.

4. Verstärkte Zusammensetzung nach irgendeinem der Ansprüche 1 bis 3, wobei das Polyphthalamid in einer Menge von 15 bis 41 Gewichtsprozent vorliegt, das aliphatische Polyamid in einer Menge von 4 bis 30 Gewichtsprozent vorliegt, und der Poly(phenylenether) in einer Menge von 14 bis 34 Gewichtsprozent vorliegt, und Gewichtsprozent auf das Gesamtgewicht der Zusammensetzung bezogen ist.

5. Verstärkte Zusammensetzung nach irgendeinem der Ansprüche 1 bis 3, wobei die Glasfaser in einer Menge von 20 bis 24 Gewichtsprozent vorliegt, das Polyphthalamid in einer Menge von 18 bis 38 Gewichtsprozent vorliegt, das aliphatische Polyamid in einer Menge von 7 bis 27 Gewichtsprozent vorliegt, und der Poly(phenylenether) in einer Menge von 17 bis 31 Gewichtsprozent vorliegt, und Gewichtsprozent auf das Gesamtgewicht der Zusammensetzung bezogen ist.

6. Verstärkte Zusammensetzung nach irgendeinem der Ansprüche 1 bis 3, wobei die Glasfaser in einer Menge von 25 bis 35 Gewichtsprozent vorliegt, das Polyphthalamid in einer Menge von 21 bis 35 Gewichtsprozent vorliegt, das aliphatische Polyamid in einer Menge von 10 bis 24 Gewichtsprozent vorliegt, und der Poly(phenylenether) in einer Menge von 20 bis 28 Gewichtsprozent vorliegt, und Gewichtsprozent auf das Gesamtgewicht der Zusammensetzung bezogen ist.

7. Verstärkte Zusammensetzung nach irgendeinem der Ansprüche 1 bis 6, wobei das aliphatische Polyamid Polyamid-6,6 umfasst.

8. Verstärkte Zusammensetzung nach irgendeinem der Ansprüche 1 bis 7, wobei die Glasfaser einen durchschnittlichen Durchmesser von 8 bis 16 Mikrometer, eine durchschnittliche Länge von 2,8 bis 3,6 Millimeter, oder eine Kombination davon aufweist.

9. Verstärkte Zusammensetzung nach irgendeinem der Ansprüche 1 bis 8, wobei der Poly(phenylenether) 2,6-Dimethyl-1,4-phenylenether-Einheiten umfasst.

10. Verstärkte Zusammensetzung nach irgendeinem der Ansprüche 1 bis 9, wobei das Funktionalisierungsmittel Maleinsäureanhydrid, Fumarsäure oder Zitronensäure umfasst.

11. Verstärkte Zusammensetzung nach irgendeinem der Ansprüche 1 bis 10, weiterhin umfassend ein schwarzes Pigment.

12. Verstärkte Zusammensetzung nach Anspruch 1, wobei das schwarze Pigment Ruß (Carbon black) ist und in einer Menge von bis zu 0,5 Gewichtsprozent, bezogen auf das Gesamtgewicht der Zusammensetzung, vorliegt.

13. Verstärkte Zusammensetzung nach irgendeinem der Ansprüche 1 bis 12, wobei die Glasfaser Nylon-Glasfaser umfasst.

## Revendications

1. Composition renforcée, comprenant :
55 à 85 % en poids d'un mélange compatibilisé d'un polyphtalamide, d'un polyamide aliphatique et d'un poly(phénylène éther), ledit mélange compatibilisé étant formé à partir d'un mélange de polyphtalamide, de poly(phénylène éther), d'un polyamide aliphatique et d'un agent de fonctionnalisation ; et
15 à 45 % en poids de fibres de verre,
dans laquelle le polyphtalamide et le polyamide aliphatique comprennent un motif répétitif commun, et la composition contient moins de 0,1 % en poids de phosphinates et moins de 0,1 % en poids de modifiants choc, les pourcentages en poids étant rapportés au poids total de la composition.

2. Composition renforcée selon la revendication 1, dans laquelle le polyphtalamide comprend :
(a) 60 à 70 % en moles de motifs de formule (I) 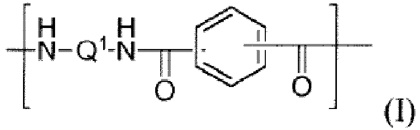 dans laquelle Q¹ est un groupe 1,6-hexyle et la portion aromatique du motif répétitif dérive de l'acide téréphtalique, (b) 20 à 30 % en moles de motifs de formule (I), dans laquelle Q¹ est un groupe 1,6-hexyle et la portion aromatique du motif répétitif dérive de l'acide isophtalique, et(c) 5 à 15 % en moles de motifs de formule (II) 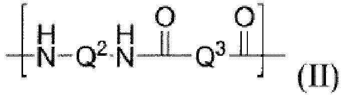 dans laquelle Q² est un groupe 1,4-butyle et Q³ est un groupe 1,6-hexyle.

3. Composition renforcée selon la revendication 2, dans laquelle le polyamide aliphatique comprend plus de 50 % en moles de motifs de formule II.

4. Composition renforcée selon l'une des revendications 1 à 3, dans laquelle le polyphtalamide est présent en une quantité de 15 à 41 pourcents en poids, le polyamide aliphatique est présent en une quantité de 4 à 30 pourcents en poids et le poly(phénylène éther) est présent en une quantité de 14 à 34 pourcents en poids, les pourcentages en poids étant rapportés au poids total de la composition.

5. Composition renforcée selon l'une des revendications 1 à 3, dans laquelle les fibres de verre sont présentes en une quantité de 20 à 24 pourcents en poids, le polyphtalamide est présent en une quantité de 18 à 38 pourcents en poids, le polyamide aliphatique est présent en une quantité de 7 à 27 pourcents en poids et le poly(phénylène éther) est présent en une quantité de 17 à 31 pourcents en poids, et les pourcentages en poids étant rapportés au poids total de la composition.

6. Composition renforcée selon l'une des revendications 1 à 3, dans laquelle les fibres de verre sont présentes en une quantité de 25 à 35 pourcents en poids, le polyphtalamide est présent en une quantité de 21 à 35 pourcents en poids, le polyamide aliphatique est présent en une quantité de 10 à 24 pourcents en poids, et le poly(phénylène éther) est présent en une quantité de 20 à 28 pourcents en poids, les pourcentages en poids étant rapportés au poids total de la composition.

7. Composition renforcée selon l'une des revendications 1 à 6, dans laquelle le polyamide aliphatique comprend le polyamide-6,6.

8. Composition renforcée selon l'une des revendications 1 à 7, dans laquelle les fibres de verre ont un diamètre moyen de 8 à 16 micromètres, une longueur moyenne de 2,8 à 3,6 millimètres, ou une combinaison de ces valeurs.

9. Composition renforcée selon l'une des revendications 1 à 8, dans laquelle le poly(phénylène éther) comprend des motifs 2,6-diméthyl-1,4-phénylène éther.

10. Composition renforcée selon l'une des revendications 1 à 9, dans laquelle l'agent de fonctionnalisation comprend l'anhydride maléique, l'acide fumarique ou l'acide citrique.

11. Composition renforcée selon l'une des revendications 1 à 10, comprenant en outre un pigment noir.

12. Composition renforcée selon la revendication 1, dans laquelle le pigment noir est le noir de carbone et est présent en une quantité allant jusqu'à 0,5 pourcent en poids, par rapport au poids total de la composition.

13. Composition renforcée selon l'une des revendications 1 à 12, dans laquelle les fibres de verre comprennent des fibres de verre et nylon.
